# EUROPEAN PATENT APPLICATION

(11) **EP 4 398 152 A1**
(43) Date of publication of application: **10.07.2024**
(21) Application number: 23150281.6
(22) Date of filing: 04.01.2023
(51) Int. Cl.: G06N 3/044, H04L 9/40

(54) **ANALYTICS PLATFORM OPTIMISATION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer implemented method of selecting a subset of data attributes from an incoming set of data that is to be processed by a set of data analytic functions, the method being performed by a computer system configured to provide the incoming set of data, having a plurality of data attributes, to a set of data analytic functions that produce one or more respective analysis results, the method comprising: defining a list of available data inputs for producing the plurality of respective analysis results, wherein the data inputs includes at least one data type and a set of data attributes associated with the respective data type; determining a utilisation of each data attribute of the set of data attributes that produces each of the respective analysis results; assigning a value to each data attribute based on the determined utilisations; constructing a set of training samples based on the set of data attributes associated with the at least one data type and the assigned values for producing the respective analysis results; training a model, based on the set of training samples, to determine a plurality of weightings of each of the set of data attributes for producing the respective analysis results; using the trained model, based on the determined plurality of weightings for producing the respective analysis results, to determine a plurality of data attributes of the incoming set of data that leads to the respective analysis results.

## Description

### TECHNICAL FIELD

The invention relates to methods, devices and systems for selecting a subset of data attributes from an incoming set of data that is to be processed by a set of data analytic functions.

### BACKGROUND

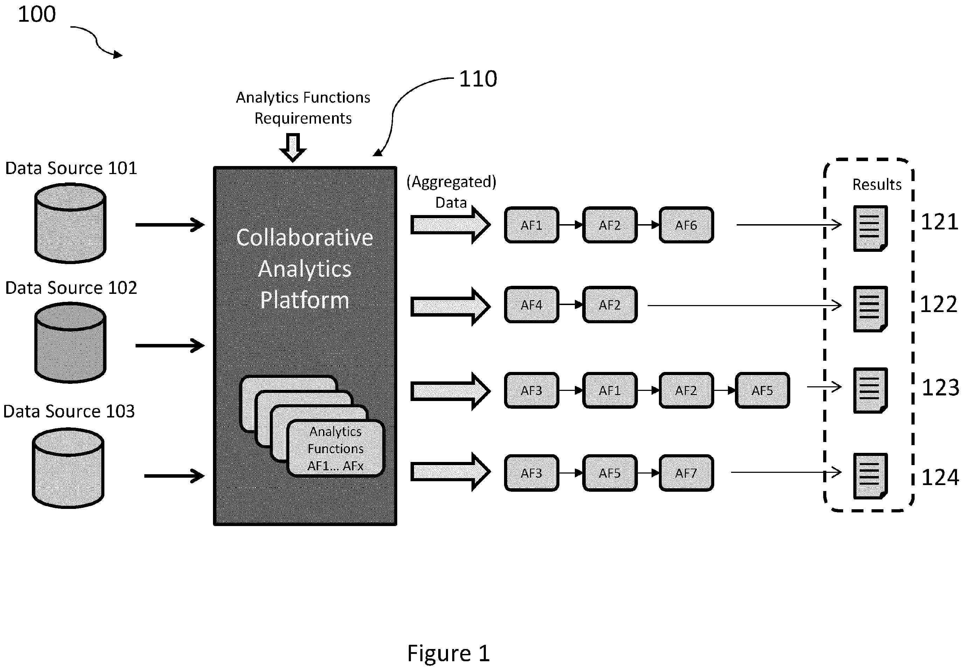

Collaboration is key to improving quality and efficiency of cyber data analytics. A group of experienced security analysts, either of the same or different organisations, may have common access to an analytics platform that allows them use various sets of data and analytics tools or functions to investigate cyber incidents or to detect and mitigate against potential cyber-attacks. While such collaborative analytics platform may be implemented in different ways, in essence it will offer a set of analytics services or functions combined with the facility to ingest and aggregate cyber data from different sources, as illustrated in Figure 1.

Figure 1 shows that sets of data from incoming data sources 101, 102, and 103 are input and processed by a collaborative analytics platform 110 in which a set of data analytic functions AF1, AF2, AF3, ..., AFx is used for data processing. Different data analytic functions may have different requirements of the input data for processing. One or more analytic functions may be used in a data processing to generate a respective result. As shown in Figure 1, the analytic functions AF1, AF2 and AF6 are used in series which then generates a result 121; the analytic functions AF4 and AF2 are used in series which then generates a result 122; the analytic functions AF3, AF1, AF2 and AF5 are used in series which then generates a result 123; the analytic functions AF3, AF5 and AF7 are used in series which then generates a result 124.

Each data source may provide one or more types of data or security logs such as IDS alerts, Web-Proxy logs, etc. Analytics functions can either be simple mathematical or statistical functions (e.g. mean, variance), advanced machine learning-based functions (e.g. clustering) or data visualisation (e.g. directional graphs). Security analysts can combine and apply the various analytics functions on select set of (aggregated) data to produce specific results. Insights and intelligence can be derived from the results to support relevant cyber incidents investigation or raise awareness of potential cyber threats. Each analytics function would have its own requirements with regard to the data types and attributes in order to allow the function to work correctly and produce expected results.

In general, current collaborative analytics platforms have a number of issues. The provided or ingested data can only be useful if their attributes match the requirements of the consuming analytics functions. Analytics functions (i.e. its users/developers) may put higher requirements on the set of data attributes than is actually needed to produced its results. Overly-high requirements of data attributes or data fields may prevent or discourage data owners to release/share their data. Redundant data may consume system resources unnecessarily and slow down the analytics performance. Accordingly, a method to build an optimisation engine which will identify a combined set of data sources or types and attributes that are significant for producing specific analysis result is desirable.

### SUMMARY OF INVENTION

The invention is defined in the independent claims. Embodiments of the invention are set out in the dependent claims.

In general, a machine learning approach is used to optimise the resource utilisation of a collaborative analytics platform during data ingestion, retrieval and analytics processes. The steps for implementing the system are: observe and capture the input data requirements of the analytics functions; train a machine learning model to learn the data utilisation patterns of various analysis tasks; and use the trained machine learning model to provide recommendations of data types and attributes for data ingestion and retrieval.

According to a first aspect, a computer implemented method of selecting a subset of data attributes from an incoming set of data that is to be processed by a set of data analytic functions, the method being performed by a computer system configured to provide the incoming set of data, having a plurality of data attributes, to a set of data analytic functions that produce one or more respective analysis results, the method comprising: defining a list of available data inputs for producing the plurality of respective analysis results, wherein the data inputs includes at least one data type and a set of data attributes associated with the respective data type; determining a utilisation of each data attribute of the set of data attributes that produces each of the respective analysis results; assigning a value to each data attribute based on the determined utilisations; constructing a set of training samples based on the set of data attributes associated with the at least one data type and the assigned values for producing the respective analysis results; training a model, based on the set of training samples, to determine a plurality of weightings of each of the set of data attributes for producing the respective analysis results; using the trained model, based on the determined plurality of weightings for producing the respective analysis results, to determine a plurality of data attributes of the incoming set of data that leads to the respective analysis results.

Embodiments may provide for: an optimisation of the utilisation of system resources for collaborative analytics and an improvement of system scalability; a speed up of the complete process of data analysis; allowing provisioning of data types and attributes on an "as-needed" basis, i.e. reduce the need to provide and store redundant data/information.

According to a second aspect there is provided a computer system configured to carry out the method of the first aspect.

According to a third aspect, a non-transitory computer readable medium having stored thereon a computer program that, when run on a system according to the second, causes the system to perform methods according to the first aspect.

### BRIEF DESCRIPTION OF THE DRAWINGS

The disclosure will be further described, by way of example only, with reference to the accompanying drawings, in which:
Figure 1 illustrates a conventional collaborative analytics platform 100 for cyber data analysis;
Figure 2 illustrates a collaborative analytics platform 200 with a data attributes recommendation engine (DRE) 220 according to aspects of the invention;
Figure 3 illustrates a Restricted Boltzmann Machine (RBM) model used by the DRE 220 according to aspects of the invention;
Figure 4 illustrates an example of a training sample for training the RBM including data utilisation values assigned to data attributes for an IDS type of data according to aspects of the invention;
Figure 5 illustrates an example of RBM with utilisation of three types of security logs as visible units {X} and four hidden units {Y} according to aspects of the invention;
Figure 6 illustrates a determining step of a subset of data attributes from a set of incoming data inputs using the trained model for respective analysis results according aspects of the invention;
Figure 7 illustrates a flowchart summarising a method including steps 710 to 760 operated by the DRE 220 according aspects of the invention;
Figure 8 illustrates a collaborative analytics platform 800 with the DRE 220 for generating two different data attributes recommendations 801 and 802 depending on different data consumptions of the platform according to aspects of the invention;
Figure 9 illustrates an example of a set of data sources being stored in a data lake 901 according to aspects of the invention; and
Figure 10 illustrates a data attributes merging process for data attributes recommendation 802 according to aspects of the invention.

### DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

Embodiments describe a method to build a machine learning based optimisation engine which identifies a combined subset of data sources/types and attributes that are significant for producing specific analysis result. Embodiments may aim to enhance the collaborative analytics platform with a Data attributes Recommendation Engine (DRE) to optimise the utilisation of data and system resources (e.g. RAM, storage).

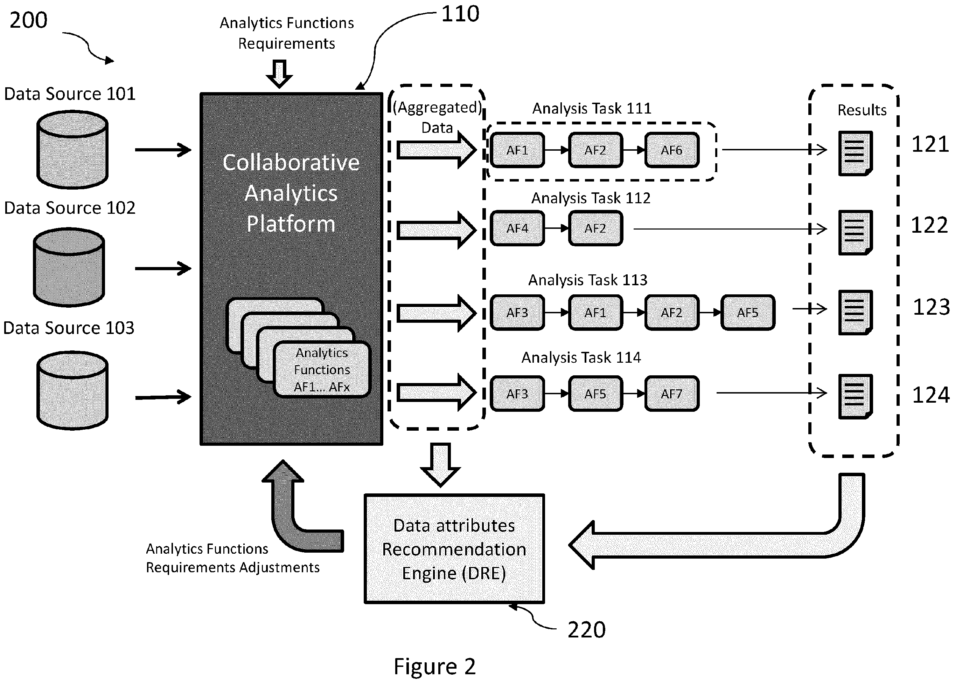

Figure 2 illustrates an exemplary collaborative analytics platform 200 with a Data attributes Recommendation Engine (DRE) 220. As shown in Figure 2, a list of data sources 101, 102 and 103 as incoming data may be input to a collaborative analytic platform 110 wherein a plurality of analytics functions are available to process the incoming data set. A respective analysis result may be produced through an analysis task. As such, a set of results 121, 122, 123, and 124 may be produced through different analysis tasks (analysis tasks 111, 112, 113 and 114) by consuming the data sources 101, 102 and 103. For each analysis task, one or more analytics functions AF1, AF2, AF3... AFx may be used in series for producing a specific analysis result. An analytics function may either be a simple aggregation function such as a grouping or average function, or more advanced such as clustering or anomaly detection.

The DRE 220 may be configured to optimise the set of data attributes which are significant for producing respective analysis results. The DRE 220 may work in conjunction with the platform to adjust the analytics functions requirements and therefore required system resources.

In some embodiments, the DRE 220 may be configured to analyse input data requirements of the analytics functions for producing specific analysis results. The DRE 220 may then be configured to learn "patterns" from the analysis tasks carried out by different analysts or users when consuming the data or specific data attributes in conjunction with various types of analytics functions. Optionally, in some embodiments, human analysts may also be represented by a computer program which performs a sequence of mathematical and analytics functions to produce specific analysis result. A common subset of data attribute requirements is then determined and selected by the DRE 220 from a set of incoming data inputs for each type of analysis results.

The data sources 101, 102 and 103 may consist of different data types. In some embodiments, the data types for cyber security analysis are referred to as security logs. The data types may also be malware or anti-virus alert data, geo-location of each security event or affected assets, etc. Each data type may include a plurality of data attributes to be processed at each analysis task. The DRE 220 aims to provide optimisations and recommendations of the useful data attributes which lead to the final analysis result for each analysis task.

To provide data attributes recommendations, the DRE 220 may employ a machine learning algorithm to learn the links and relationships among the available data attributes of different (security) logs and the respective analysis results through the observation of analysis tasks performed by analysts (or their programs or scripts). In particular the algorithm aims to learn weightings applicable to the utilisation of each data attribute that leads to specific analysis outcomes. The trained machine learning model may eventually reflect the fact that the higher the weight assigned to a specific data attribute, the more frequently that attribute has been used to produce a certain result. This also means that the data attribute has a higher impact and significance on the result.

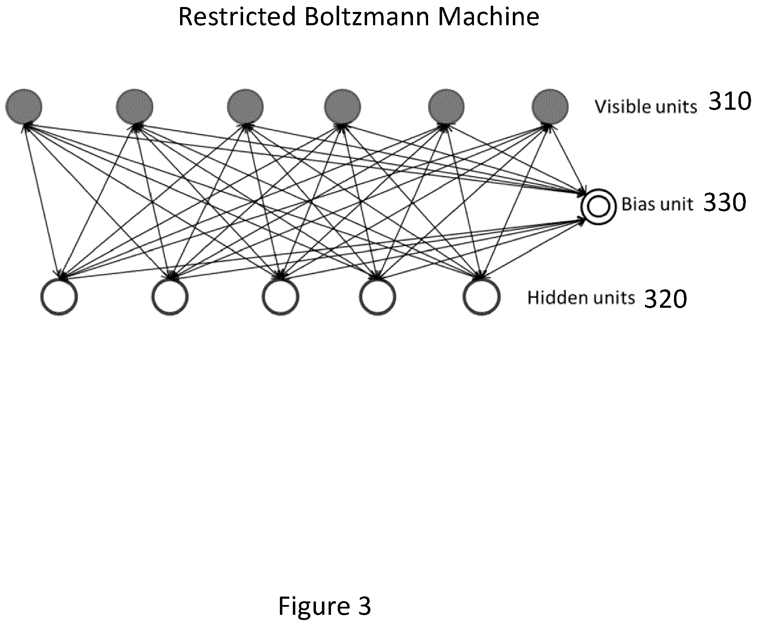

The present invention may implement the DRE 220 using the Restricted Boltzmann Machine (RBM) as described in the following. A schematic illustration of a RBM is shown in Figure 3. RBM is a stochastic neural network, such as a network of neurons where each neuron has some random behaviour when activated. It consists of one layer of visible units 310 (neurons), one layer of hidden units 320 and a bias unit 330. Each visible unit 310 is connected to all the hidden units 320 (this connection is undirected, so each hidden unit 320 is also connected to all the visible units 310), and the bias unit 330 is connected to all the visible units 310 and hidden units 320. The bias unit 330 may be used to allow other units to learn an appropriate threshold. No visible unit 310 may be connected to any other visible unit 310 and no hidden unit 320 may be connected to any other hidden unit 320. After successful learning, an RBM provides a closed-form representation of a distribution underlying the training data.

RBMs have found applications in dimensionality reduction, classification, collaborative filtering, feature learning and topic modelling. In the context of the present embodiments the DRE 220 may use RBM for collaborative filtering which is a process of filtering for information or patterns using techniques involving collaboration among multiple agents, viewpoints, data sources, etc. The visible units 310 may correspond to the utilisation of data attributes of each type of security log (i.e. data source) that have been observed from analysis tasks performed by the analysts. The hidden units 320 may represent the latent factors underlying the observed data utilisation. The DRE 220 aims to learn these latent units and corresponds them with the different types of analysis results.

At the start of the training process, a set of training samples may be constructed to train a machine learning model. A utilisation of the set of data attributes included in the set of incoming data input is determined with respect to the respective analysis results due to different data analysis processes by the analytics functions. In some embodiments, binary values may be assigned to each data attribute indicating their overall use (e.g. utilisation). For example, if the three analytics functions AF1, AF5 and AF6 were used to produce a result, but only the analytics function AF6 was using the source IP attribute, then the value for the source IP attribute needs to be set to "1". It may be set to "0" if it was never used by any of the analytics functions during the analysis task.

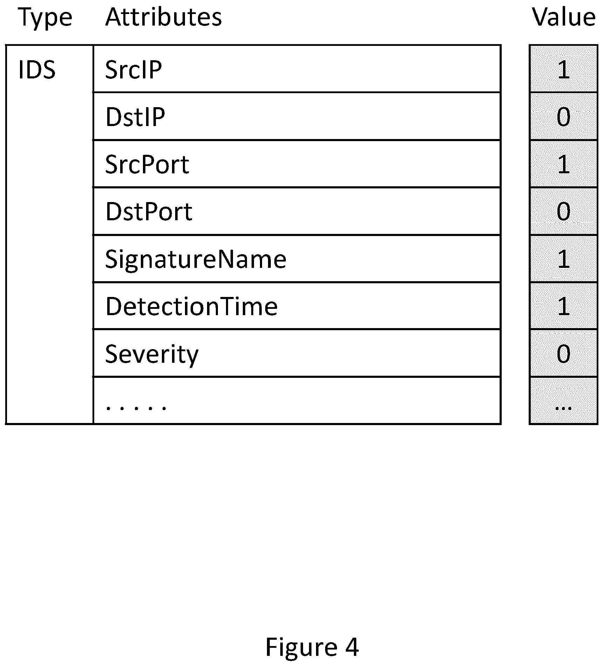

Accordingly, each training dataset or sample {X} (i.e. input features for the visible units) consists of the list of available attributes for specific data type or security logs (e.g. IDS logs) combined with its utilisation when producing certain analysis result. Figure 4 shows an example of such training sample for an IDS alert.

In a next step, the input features for different data types may then be merged together to a complete training sample representing the RBM visible units. In case that the observed analysis task does not consume a specific type of security log, zero values will be assigned to the respective attributes. In some embodiments, the data types may be security logs. The security logs may include IDS alerts, WebProxy logs, Firewall, etc.

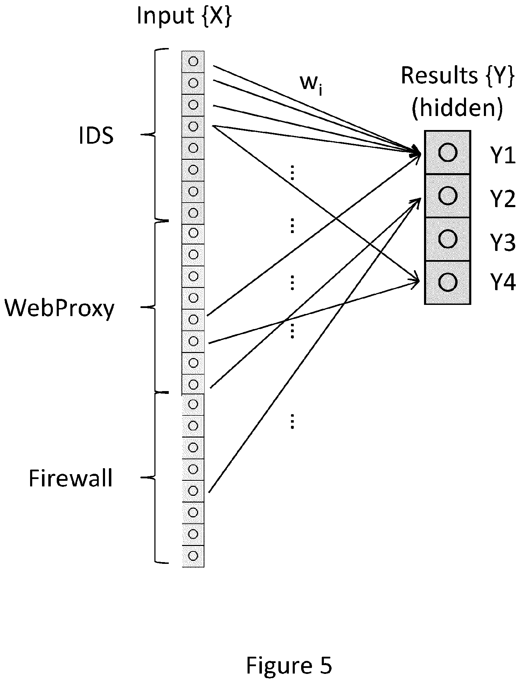

Figure 5 shows an example of RBM with utilisation of three types of security logs as visible units {X} and four hidden units {Y} which should correspond to four types of analysis results, Y1, Y2, Y3 and Y4. The weightings {w} indicate how significantly each of the data attributes contributes to the results which are to be determined through the training phase of the RBM.

Once enough training samples are collected, the RBM training phase for determining the weightings vector {w} may be carried out. The number of hidden units may be increased or decreased to achieve better accuracy. The number of hidden units should represent the typical number of different types of analysis results. This number can for example be collectively obtained from the analysts by asking them to indicate the type of results (e.g. identification of attack family) from a given list each time they complete an analysis tasks.

An algorithm known as "Contrastive Divergence Learning" can be used to train the RBM. Contrastive Divergence Learning may perform a number of iterations to compute the states of hidden units based on the states of visible units, and vice versa, whereas the states of visible units are reconstructed from the hidden units. The number of iterations may increase with learning steps to achieve better accuracy. The number of hidden units is estimated at the start of the training phase and may increase or decrease to achieve better accuracy.

An estimation of the number of hidden units 406 may be based on the number of available analysis results. The precise implementation may depends on how the analytics platform is designed and implemented and it is also possible that the number of analysis result types are fixed. Otherwise, an educated guess of the number (i.e. a likely small number) could be used as starting point at the beginning of the training while calculating the weights in the RBM. In a number of training iterations the number can be increased gradually to see if there is any significant change in the mean reconstruction loss/error (when {Y} is being reconstructed to {X}). If the reconstruction error is still too high it would mean that there are not enough hidden units in the model. Having too few hidden units will give poor prediction/accuracy while having too many units will overfit the training data. One method/algorithm that could be used to estimate the right number of hidden units is the "Projection Pursuit" method as described in "Y. Freund, D. Haussler: Unsupervised learning of distributions on binary vectors using two layer networks. 1991". NIPS (NeurIPS) 2 December 1991.

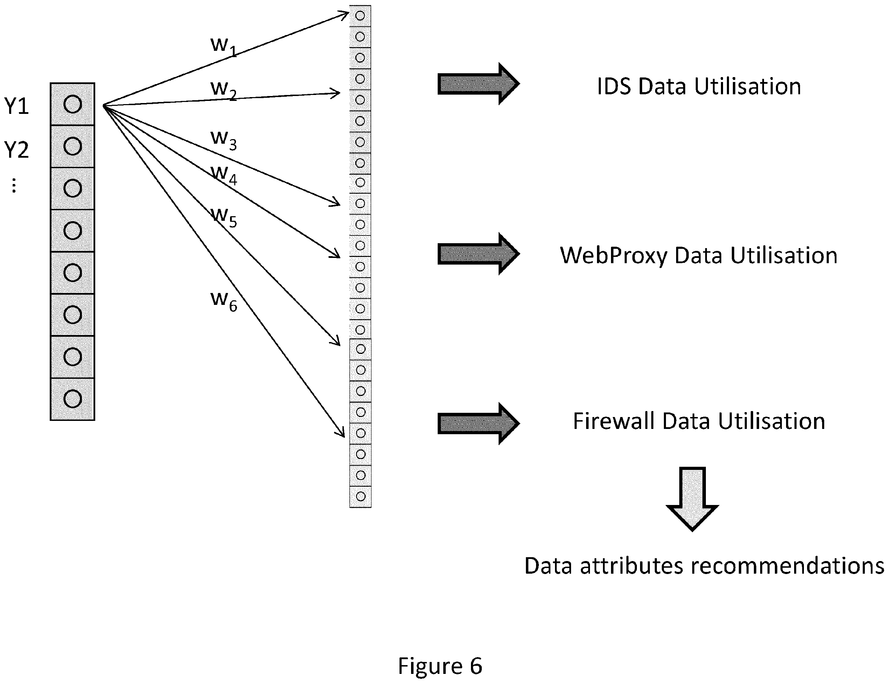

The trained RBM may be then used to generate a model for a joint probability distribution of all inputs consisting of features set {X}. The model may be a stochastic model which is a tool for estimating probability distributions of potential outcomes by allowing for random variation in one or more inputs over time. The model may be mainly represented by the computed weights {w} of the connections between visible (v) and hidden (h) units. Each hidden unit (i.e. Y1, Y2, etc.) will then be used to reconstruct the set of input features that have activated that particular hidden unit, e.g. Y1=1 as shown in Figure 6.

As mentioned earlier, the weightings give indication of the significance of each data attribute on the result. The final set of reconstructed input parameters can then be used as a recommendation for the platform to only ingest a select set of data attributes that have significance to a specific analysis task. The reconstructed input parameters also indicate the types of security logs that should be combined or united (e.g. IDS logs combined with WebProxy logs) in order to produce useful analysis results. In some embodiments, the DRE may optionally apply threshold to the weightings in order to reduce the number of (reconstructed) input features, i.e. reducing the requirements of data attributes. This thresholding process may need to be coupled with user feedbacks to ensure that removing a specific data attribute (because its weighting lies below threshold) will not significantly affect the analysis result, i.e. the result is still useful or acceptable. As illustrated in Figure 6 the reconstructed input parameters depend on which hidden unit, such as Y1, Y2, Y3..., from {Y} was selected. This means that the DRE 220 may generate different data utilisation recommendations or patterns for different types of analysis tasks.

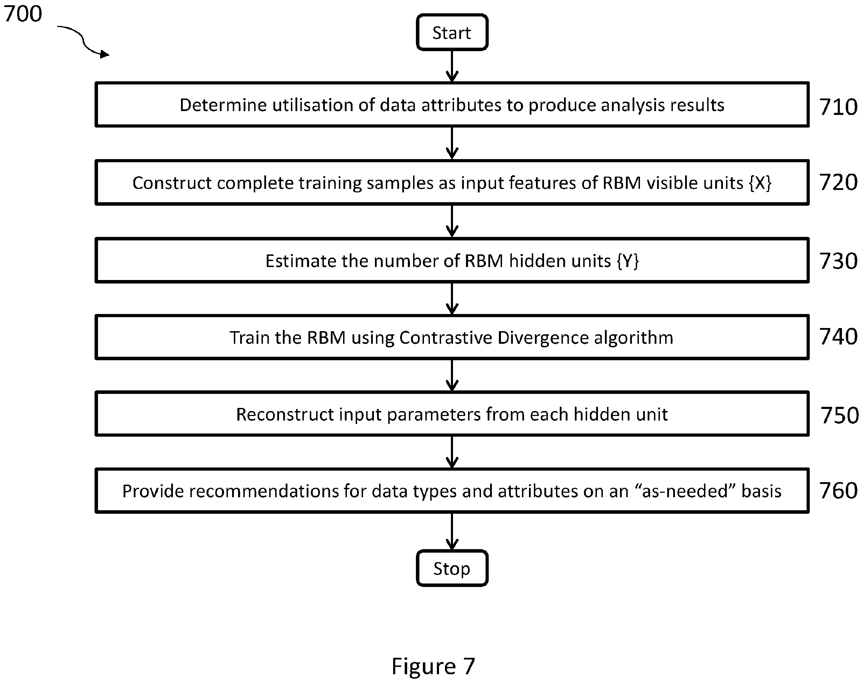

Figure 7 illustrates a flowchart showing a method 700 operated by the DRE 220 which summarises the steps carried out in the above-mentioned Figures 3 to 6. A set of data attributes included in data sources 101, 102, and 103 may be listed as incoming data input; and the respective analysis results 121, 122, 123 and 124 through different combinations of analytics functions may be listed as a set of respective analysis results. At a first step of method 700, step 710, a utilisation of the set of data attributes included in the set of incoming data input is determined with respect to the respective analysis results due to different data analysis processes by the analytics functions.

In the second step of method 700, step 720, a set of training samples may be constructed to train a machine learning model, wherein each training dataset or sample {X} (i.e. input features for the visible units) consists of the list of available attributes for specific data type combined with its utilisation when producing certain analysis result. The input features for different data types may then be merged together to a complete training sample representing the RBM visible units.

At a step 740 of method 700, the RBM is trained using an algorithm of Contrastive Divergence algorithm once enough training samples are collected. The training phase aims to determine the weightings vector {w}. Optionally, a step 730 may be operated to estimate a number of hidden units at the start of this training phase before the training step 740.

At step 750 of method 700, the trained RBM may be then used to generate a model represented by the computed weights {w} from previous training steps, to establish connections between visible (v) and hidden (h) units. Each hidden unit (i.e. Y1, Y2, etc.) will then be used to reconstruct the set of input features that have activated that particular hidden unit.

At step 760 of method 700, recommendations of data types and data attributes may be provided for producing respective analysis results on an as-needed basis.

The steps 710 to 740 of method 700 may need to be repeated after a while in order to reflect significant changes in the collaborative analytics platform, e.g. new types of security logs or analytics functions are being introduced to support new types of analysis or improve existing ones.

In some embodiments, the DRE 220 may generate recommendations depending on how the data ingestion process is implemented in the collaborative analytics platform. If the data are ingested on-demand at the time a specific analysis task is being performed then task-specific recommendations would help to reduce the system resource requirements (e.g. storage) and speed up the whole process. However, if data are ingested regularly and cached in local storage prior to their use in any analysis task such multiple recommendations need to be consolidated first.

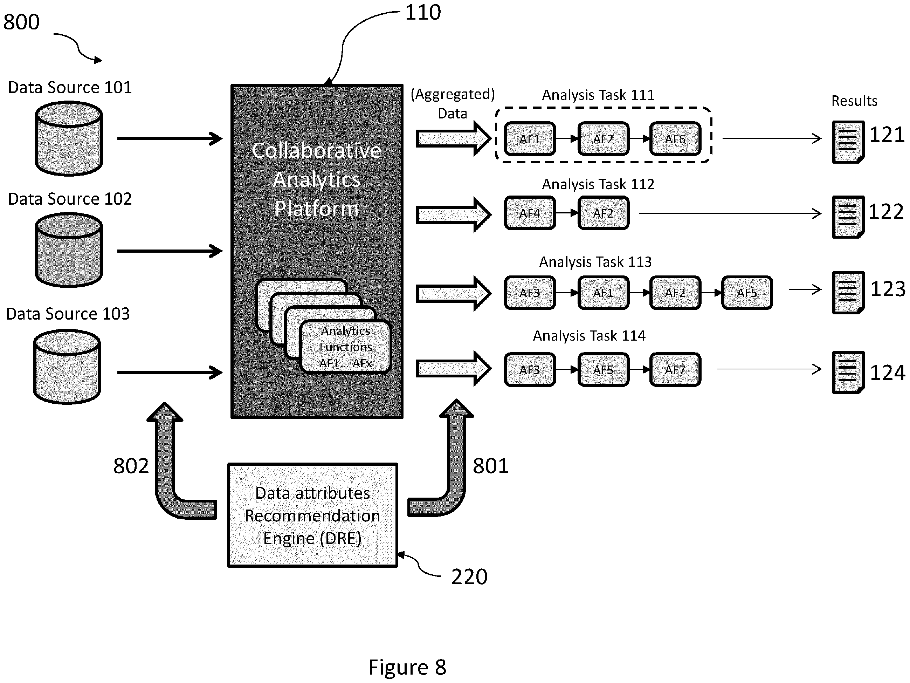

Figure 8 shows the two different types of data attributes recommendations generated by the DRE 220 depending on different data consumptions. The two types of data attributes recommendations are namely a data attributes recommendation 801, a task-specific attributes recommendations for data retrieval; and a data attributes recommendation 802, a consolidated attributes recommendations for data ingestion.

The DRE 220 may be configured to generate the data attributes recommendation 801 for an on-demand type of data consumption. In this case, the data can be directly provided or fed to a set of analytics functions for further processing of different analysis tasks. This way the data source (i.e. data owner) can know exactly which data attributes should be included using the DRE 220 when providing the data to the requesting analytics functions for producing specific results. This may apply to each data type. The owner may have complete control of their data, i.e. which and when data attributes will be made available for particular analytics users.

In addition, the DRE 220 may be configured to generate the data attributes recommendation 802 when a cache or storage means is used to regularly collect and store the data from each data source without an immediate request from any analytics function to consume the data. In this case, the data may be collected periodically, or each time new data is available (i.e. new security events or alerts).

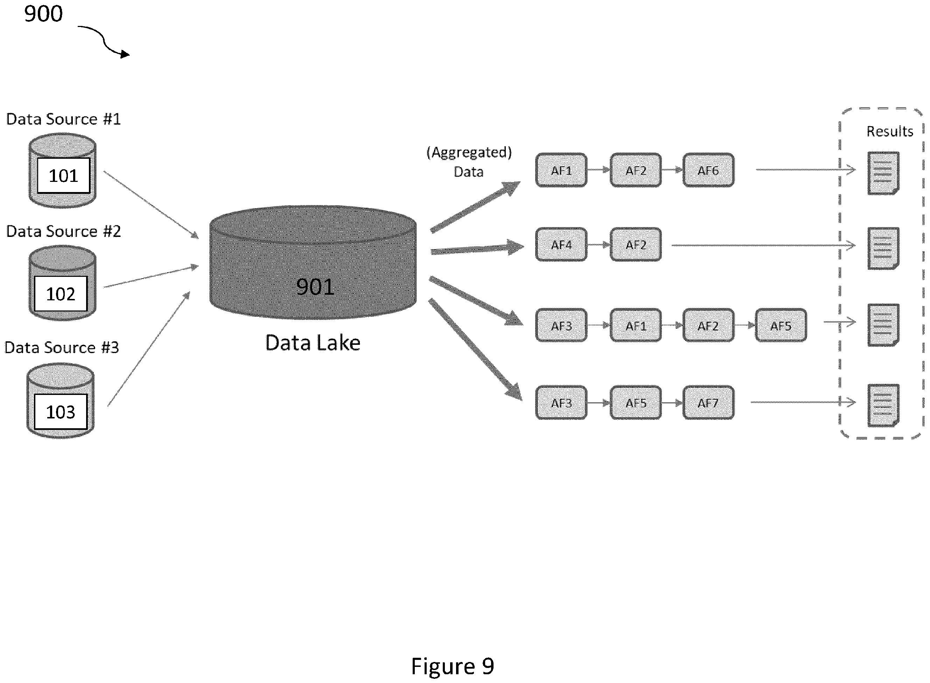

Figure 9 shows an example of an architecture for the use of a data lake 901 as a storage means to store all the data in one place for a specific period of time. The analytics functions will then retrieve the required data from the data lake 901 instead. This is in contrast to the on-demand type data consumption which retrieves data directly from the data source as it is being processed. Since it is not clear to the data owner at the beginning which analytics functions will be used based on which set of data to produce which analysis results, the data contained in the data lake 901 should have all the data attributes that are required for producing any type of analysis results. Therefore, a consolidation or merging process of the attributes recommendation is needed to satisfy that requirement.

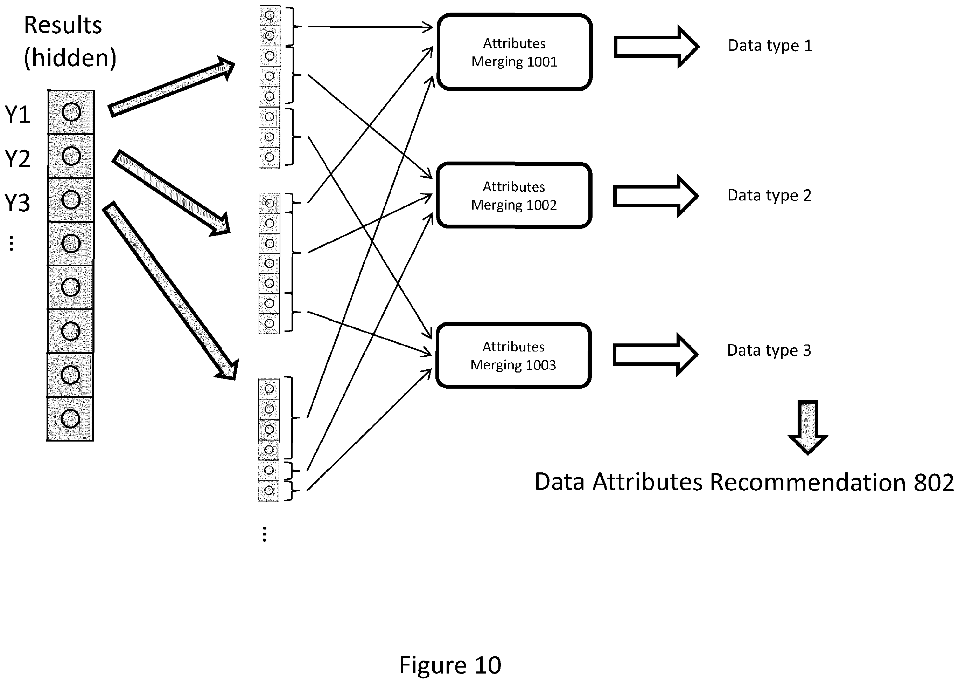

As shown in Figure 10, a set of attributes merging processes for different data types (e.g. IDS data utilisation, WebProxy data utilisation, and Firewall data utilisation) may be carried out for generating the consolidated recommendations 802 by the DRE 220. Data attributes from different analysis tasks need to be merged or combined that each analysis task can be completed successfully without missing one or more data attributes.

The input parameters that have been reconstructed from different analysis results (i.e. hidden units {Y}) need to be merged for each type of security logs as illustrated in Figure 10. At the end of the merging process the number of attributes recommendations is reduced to the number of data types (i.e. security log types).

The data attributes recommendation 802 generated through the attributes merging process by the DRE 220 may be an optional implementation that may or may not be preferred by the data source owner. The main advantage is to reduce interactions with the data owner (i.e. reduce loads and any potential delays). Even when the data source owner is happy to use the data lake to temporarily store their data, we can have an implementation where the owner will still be able to select which analytics functions can use their data to produce a select number of result types. Nevertheless the analytics platform should continue only provide the required data attributes (based on the task-specific recommendations) for each type of result.

The original task-specific recommendations can later be used to determine the optimal combination of data types or security logs along with their attributes that need to be retrieved from the platform's (cache) storage prior to its use in particular analysis task. This may lead to higher throughput and less memory consumption compared to when no task-specific recommendations are used.

It will be understood by those skilled in the art that the apparatus that embodies the invention could be a general purpose device (or group of devices) having software arranged to provide an embodiment of the invention. Furthermore, any or all of the software used to implement the invention can be contained on various storage mediums such as a floppy disc, CD-ROM, or magnetic tape so that the program(s) can be loaded onto one or more general purpose devices, or could be downloaded over a network.

The computer-implemented method described above may be implemented in a form of computer program. The computer program may be stored in at least one memory of at least one computer system. The computer system may also comprise at least one processor configured to perform the computer program. Optionally, the computer system may be connected to and/or form a part of the computer network.

## Claims

1. A computer implemented method of selecting a subset of data attributes from an incoming set of data that is to be processed by a set of data analytic functions,
the method being performed by a computer system configured to provide the incoming set of data, having a plurality of data attributes, to a set of data analytic functions that produce one or more respective analysis results,
the method comprising:
defining a list of available data inputs for producing the plurality of respective analysis results, wherein the data inputs includes at least one data type and a set of data attributes associated with the respective data type;
determining a utilisation of each data attribute of the set of data attributes that produces each of the respective analysis results;
assigning a value to each data attribute based on the determined utilisations;
constructing a set of training samples based on the set of data attributes associated with the at least one data type and the assigned values for producing the respective analysis results;
training a model, based on the set of training samples, to determine a plurality of weightings of each of the set of data attributes for producing the respective analysis results;
using the trained model, based on the determined plurality of weightings for producing the respective analysis results, to determine a plurality of data attributes of the incoming set of data that leads to the respective analysis results.

2. The computer implemented method of claim 1, wherein a minimum number of data attributes that are used among the incoming set of data for producing the respective analysis results are selected.

3. The computer implemented method of any preceding claim, the method further comprising:
applying a threshold to the weightings to reduce the number of the subset of data attributes of the incoming set of data that leads to the respective analysis results.

4. The computer implemented method of any preceding claim wherein the analysis results are for cyber security analysis for detecting and mitigating against potential cyber-attacks.

5. The computer implemented method of any preceding claim, wherein the one or more analytics functions include mathematical or statistical functions, advanced machine learning-based functions or data visualisation.

6. The computer implemented method of any preceding claim, wherein the model for training is Restricted Boltzmann Machine (RBM) including one layer of visible units and one layer of hidden units.

7. The computer implemented method of claim 6, wherein each visible unit is connected to all the hidden units.

8. The computer implemented method of claim 6 or 7, wherein the visible units correspond to the utilisation of data attributes of each data type.

9. The computer implemented method of any one of claims 6 to 8, the method further comprising:
estimating a number of RBM hidden units.

10. The computer implemented method of any one of claims 6 to 9, wherein the RBM model is trained using an algorithm of Contrastive Divergence Learning.

11. The computer implemented method of any one of claims 1 to 10, wherein the at least one data type includes IDS alerts, WebProxy logs or Firewall logs, wherein the data attributes for IDS alerts optionally include source IP, destination IP, source Port, destination Port, Signature Name, Detection Time, Severity.

12. The computer implemented method of any one of claims 1 to 11, wherein the incoming set of data is collected and stored in a storage means before being processed by any analytics function, the method further comprising:
merging the determined plurality of data attributes of the incoming set of data which leads to the respective analysis results according to each of their data types.

13. The computer implemented method of any preceding claim, wherein the determining, assigning, constructing, and training steps are repeated in response to changes in data types of the incoming data or analytics functions for generating new analysis results.

14. A computer system configured to perform the method of any of claims 1 to 13.

15. A non-transitory computer readable medium having stored thereon a computer program that, when run on a system according to claim 14, causes the system to perform the method of any of claims 1 to 13; and/or a computer program that, when run on a system according to claim 14, causes the system to perform the method of any of claims 1 to 13.
